# EUROPÄISCHE PATENTSCHRIFT

(11) **EP 2 825 921 B1**
(45) Veröffentlichungstag und Bekanntmachung des Hinweises auf die Patenterteilung: **04.03.2020**
(21) Anmeldenummer: 13712508.4
(22) Anmeldetag: 14.03.2013
(51) Int. Cl.: G05B 19/048

(54) **STEUERUNGSVORRICHTUNG ZUM STEUERN VON SICHERHEITSKRITISCHEN PROZESSEN IN EINER AUTOMATISIERTEN ANLAGE UND VERFAHREN ZUR PARAMETERIERUNG DER STEUERUNGSVORRICHTUNG**
CONTROL DEVICE FOR CONTROLLING SAFETY-CRITICAL PROCESSES IN AN AUTOMATED PLANT AND METHOD FOR PARAMETERIZING THE CONTROL DEVICE
DISPOSITIF DE COMMANDE POUR LA COMMANDE DE PROCESSUS CRITIQUES POUR LA SÉCURITÉ DANS UNE INSTALLATION AUTOMATISÉE ET PROCÉDÉ DE PARAMÉTRISATION DU DISPOSITIF DE COMMANDE

(30) Priorität: 15.03.2012 DE 102012102187
(43) Veröffentlichungstag der Anmeldung: 21.01.2015
(73) Patentinhaber: Phoenix Contact GmbH & Co. KG, 32825 Blomberg (DE)
(72) Erfinder: SCHMIDT, Joachim, 31812 Bad Pyrmont (DE)
(74) Vertreter: Blumbach · Zinngrebe Patentanwälte PartG mbB
(86) Internationale Anmeldenummer: PCT/EP2013/055225
(87) Internationale Veröffentlichungsnummer: WO 2013/135807

(56) Entgegenhaltungen:
- EP-A2- 2 302 472
- EP-B1- 1 746 767
- US-A- 5 980 078
- US-B2- 7 330 768

## Beschreibung

Die Erfindung betrifft allgemein das technische Gebiet der Automatisierungssysteme zur Steuerung industrieller Fertigungsprozesse. Insbesondere betrifft die Erfindung sicherheitsgerichtete Funktionen in solchen Automatisierungssystemen, sowie die Parametrierung der sicherheitsgerichteten Funktionen.

Die EP 2 302 472 A2 beschreibt ein Steuerungssystem zum Steuern von sicherheitskritischen Prozessen mit einem nicht-sicheren Master.

Die US 7 330 768 B2 betrifft eine Prozessanlage mit einem Sicherheitssystem, das physikalisch und logisch derart in ein Prozesssteuerungssystem eingegliedert ist, dass das Sicherheits- und Prozesssteuerungssystem eine gemeinsame Hard- und Software für Kommunikation und Konfiguration in der Prozessanlage verwenden können. Zugleich ist eine funktionale Entkopplung zwischen den Sicherheitssystemsteuerungen und den Prozesssteuerungssystemsteuerungen vorgesehen.

Die US 5 980 078 A betrifft ein digitales Steuersystem mit einer vorbestimmten Konfiguration, das automatisch die Verbindung eines Netzwerks mit einer digitalen Vorrichtung erkennt, die nicht in der vorbestimmten Konfiguration enthalten ist.

Die EP 1 746 767 B1 betrifft eine Technologie für das Konfigurationsmanagement einer Endgeräteausstattung eines Kommunikationssystems. Ausführungsformen offenbaren ein Konfigurationsverwaltungsverfahren und -system für eine Ausrüstung eines Kunden, die eine einfachere Interaktion zwischen einem Konfigurations-Server und Teilnehmereinrichtungen im Falle von Chargenkonfigurationsmanagement auf den Teilnehmereinrichtungen ermöglichen.

Aus der DE 102009 042 354 A1 sind ein Verfahren und eine Vorrichtung zur sicherheitsgerichteten Kommunikation im Kommunikationsnetzwerk einer Automatisierungsanlage bekannt. Eine grundlegende Idee besteht dabei darin, die Sicherheitsfunktion einer Anlage in kleine, überschaubare, lokal begrenzbare und einfach verifizierbare Modulgruppen aufzuteilen. Diese Gruppen bilden mehr oder weniger autarke Inseln innerhalb des Kommunikationsnetzwerks. Im Speziellen sind ein nicht sicherer Kommunikations-Master und mehrere dezentrale Module als Netzwerkteilnehmer vorgesehen. Die dezentralen Module sind dementsprechend mit dem Kommunikations-Master mittels eines Kommunikationsnetzwerkes vernetzt, wobei die Kommunikation zwischen den dezentralen Modulen im Kommunikationsnetzwerk über Telegramme realisiert wird. Dabei sind mehrere der Module Sicherheitsmodule, zwischen denen sicherheitsgerichtete Daten übermittelt werden und eine logische Gruppe von Modulen zur Ausführung einer sicherheitsgerichteten Funktion bilden. Für die Kommunikation der Sicherheitsmodule innerhalb einer logischen Gruppe hält der Kommunikations-Master eine Routing-Tabelle, in welcher logische Verbindungen zwischen den dezentralen Sicherheitsmodulen entsprechend der sicherheitsgerichteten Funktion abgelegt sind. Der Kommunikations-Master nimmt dann gesteuert anhand der Routing-Tabelle ein automatisches Routing der Daten vom sendenden Sicherheitsmodul zum empfangenden Sicherheitsmodul vor, so dass eine Kommunikation zwischen den zu einer logischen Gruppe gehörenden Sicherheitsmodulen jeweils über zwei Punkt-zu-Punkt Verbindungen, nämlich vom sendenden Sicherheitsmodul zum Kommunikations-Master und weiter vom Kommunikations-Master zum empfangenden Sicherheitsmodul erfolgt. Das Kommunikationsnetzwerk weist eine Einrichtung auf, um Informationen für das Erstellen der Routing-Tabelle von den Sicherheitsmodulen abzufragen und die Routing-Tabelle anhand dieser Information zu erstellen.

Die DE 10 2009 042 368 A1 beschreibt weiterhin ein Steuerungssystem zum Steuern von sicherheitskritischen Prozessen mit einem nicht sicheren Kommunikations-Master und einem nicht sicheren Kommunikations-Netzwerk. Zumindest einige der Netzwerkteilnehmer umfassen Sicherheitsdateneingangs-Objekte (SDI-Objekte), wie z.B. sicherheitsgerichtete Sensoren und/oder Sicherheitsdatenausgangs-Objekte (SDO-Objekte), wie etwa sicherheitsgerichtete Aktoren. An das Netzwerk sind Netzwerkteilnehmer angeschlossen, die als dezentrale sichere Netzwerkteilnehmer ausgebildet sind und im Unterschied zu den SDI- oder SDO-Objekten jeweils eine eigene dezentrale Sicherheitssteuerung aufweisen. Dazu weisen diese Netzwerkteilnehmer eine eindeutige, einstellbare Sicherheitsadresse auf.

Die sicheren Netzwerkteilnehmer sind mit SDI- und/oder SDO-Objekten zu Sicherheitsinseln gruppiert. Mit dieser Konfiguration ist gesteuert durch die dezentralen Sicherheitssteuerung sowohl eine inselinterne Kommunikation zwischen sicherem Netzwerkteilnehmer und zugeordneten SDI- und SDO-Objekten, als auch eine inselübergreifende sicherheitsgerichtete Kommunikation zwischen den sicheren Netzwerkteilnehmern möglich.

Der Erfindung liegt nun die Aufgabe zugrunde, eine einfache und sichere Parametrierung der sicherheitsgerichteten Einrichtungen einer solchen Automatisierungsanlage, beziehungsweise eines Steuerungssystems zum Steuern von sicherheitskritischen Prozessen bereitzustellen. Insbesondere soll ein möglichst einfaches Verfahren, welches mit Hilfe von Mitteln, die möglichst jede nicht sichere Steuerung und jedes Netzwerk zur Verfügung stellen, die Parametrierung eines modularen, dezentralen und sicheren Automatisierungssystems ermöglicht werden.

Zur Parametrierung von Netzwerkteilnehmern ist der sogenannte iPar-Server der Profisafe-Spezifikation bekannt. Hierbei ist vorgesehen, dass die sicheren Netzwerkteilnehmer mit einem Rechner, wie etwa einem PC parametriert werden und diese Parametrierung dann remanent speichern und zusätzlich an den iPar-Server übertragen. Der iPar-Server ist selbst nicht sicher ausgelegt und kann zum Beispiel in eine nicht sichere Steuerung im Netzwerk integriert sein. Nach dem Power-Up läuft der sichere Netzwerkteilnehmer mit seiner gespeicherten Parametrierung hoch. Ist der sichere Netzwerkteilnehmer defekt, so ist ein Austausch dieses Teilnehmers notwendig. Der neue sichere Teilnehmer verfügt nun nicht über die notwendige Parametrierung. Dieses meldet der Teilnehmer dem iPar-Server, der an ihn daraufhin die benötigten sicheren Parameter überträgt. Die sicheren Parameter müssen dazu eine eigene Absicherung gegen Verfälschung enthalten.

Im SafetyBridge-System, welches auch als INLINE-Safety-System bezeichnet wird und in den oben genannten Druckschriften DE 10 2009 042 354 A1 und
DE 10 2009 042 368 A1 beschrieben wird, kann die Erfindung verwendet werden, um ein sicheres Logikmodul und die zugehörigen sicheren Netzwerkteilnehmer zu parametrieren. Es wird die Integration mit verschiedensten nicht sicheren Steuerungen und Netzwerken ermöglicht.

Das SafetyBridge-System beruht darauf, dass eine nicht sichere Steuerung, beziehungsweise ein nicht sicherer Kommunikationsmaster mit Hilfe von Verbindungen über ein beliebiges Netzwerk und von Kopierbefehlen den Austausch von sicheren Telegrammen mit sicheren E/A-Daten zwischen den Netzwerkteilnehmern mit sicheren Ein- und/oder Ausgängen und dem Logikmodul, welches die sicheren E/A-Daten verarbeitet und auch selber über sichere Ein- und/oder Ausgänge verfügen kann, ermöglicht. So entsteht zwischen dem Logikmodul und jedem ihm zugeordneten sicheren Netzwerkteilnehmer eine sichere Punkt- zu Punkt-Verbindung, auf der sichere Telegramme in beiden Richtungen übertragen werden. Die Erfindung ist insbesondere zur Parametrierung eines Logikmoduls dieses SafetyBridge-Systems geeignet.

Erfindungsgemäß ist eine Steuerungsvorrichtung mit einem Kommunikationsnetzwerk zum Steuern von sicherheitskritischen Prozessen in einer automatisierten Anlage, sowie ein damit durchführbares Parametrierungsverfahren vorgesehen, wobei die Steuerungsvorrichtung
- einen insbesondere nicht sicheren Kommunikationsmaster zur Steuerung des Datenflusses auf dem Kommunikationsnetzwerk und
- eine Mehrzahl von Netzwerkteilnehmern, wobei
- zumindest eine Teilmenge der Netzwerkteilnehmer als sichere Netzwerkteilnehmer ausgebildet sind, und
- zumindest ein sicheres Logikmodul als weiteren Netzwerkteilnehmer zum Steuern einer sicherheitsrelevanten Applikation mittels einer Gruppe von sicherheitsgerichteten Netzwerkteilnehmern aufweist, dadurch gekennzeichnet, dass das Logikmodul und der Kommunikationsmaster eingerichtet sind zur Durchführung folgender Schritte, um das Logikmodul zu parametrieren:
- das Logikmodul sendet unter Ansprechen auf den Empfang eines über das Kommunikationsnetzwerk gesendeten Start-Kommandos an den Kommunikationsmaster eine Leseanforderung über das Kommunikationsnetzwerk,
- der Kommunikationsmaster sendet unter Ansprechen auf den Empfang der Leseanforderung Parametrierungsdaten an das Logikmodul,
und zumindest einer der dem Logikmodul für die Steuerung einer sicherheitsgerichteten Applikation zugeordneten sicheren Netzwerkteilnehmer dazu eingerichtet ist, unter Ansprechen auf den Empfang eines vom Logikmodul gesendeten Start-Kommandos eine Leseanforderung über das Kommunikationsnetzwerk an das Logikmodul zu senden, und wobei das Logikmodul dazu eingerichtet ist, unter Ansprechen auf den Empfang der Leseanforderung Parametrierungsdaten an den jeweiligen sicheren Netzwerkteilnehmer zu senden, von welchem die Leseanforderung empfangen wurde.

Eine Besonderheit der Erfindung ist demgemäß, dass nach dem Empfang eines vom Kommunikationsmaster gesendeten Startsignals alle weiteren Aktivitäten vom Empfänger, also dem Logikmodul, gesteuert werden.

Die Erfindung wird nachfolgend genauer anhand von Ausführungsbeispielen und unter Bezugnahme auf die beigeschlossenen Zeichnungen näher erläutert. Dabei verweisen in den Zeichnungen gleiche Bezugszeichen auf gleiche oder entsprechende Elemente. Es zeigen:
Fig. 1 ein Verschaltungsschema einer Steuerungsvorrichtung,
Fig. 2 ein E/A-Abbild des Kommunikationsmasters,
Fig. 3 ein Ablaufdiagramm für die Parametrierung eines Logikmoduls, und
Fig. 4 eine Variante des Verschaltungsschemas mit mehreren Logikmodulen.

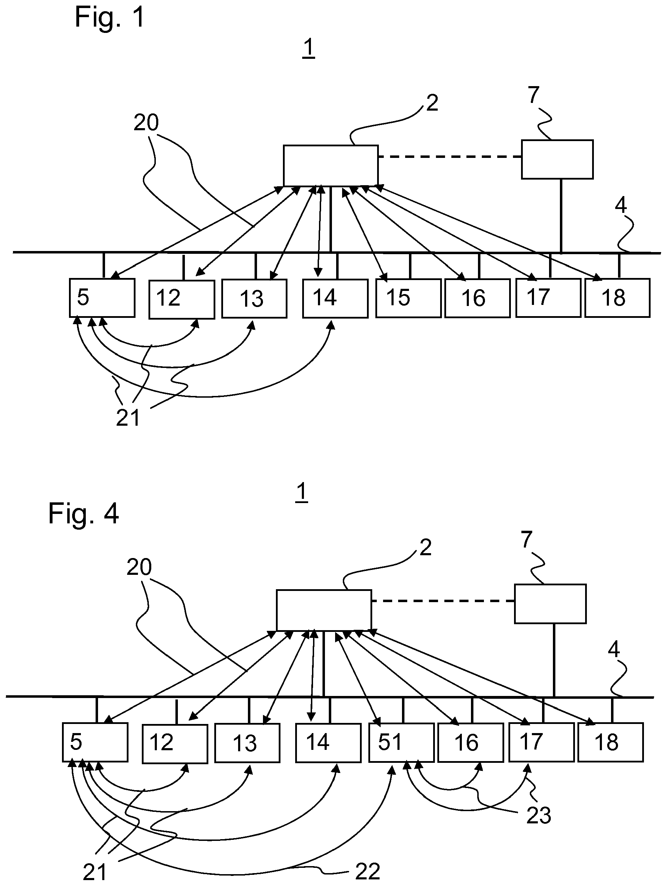

Fig. 1 zeigt ein Verschaltungsschema eines Ausführungsbeispiels einer erfindungsgemäßen Steuerungsvorrichtung 1 mit einem Kommunikationsnetzwerk 4, die neben der Steuerung automatischer Fertigungs- und Überwachungsprozessen auch zum Steuern von sicherheitskritischen Prozessen in einer automatisierten Anlage ausgelegt ist. Mit dem Kommunikationsmaster 2 sind eine Anzahl von Netzwerkteilnehmern 5, 12 - 18 über das Kommunikationsnetzwerk 4 verschaltet. Die Kommunikation der Netzwerkteilnehmer 5, 12 - 18 erfolgt in Weiterbildung der Erfindung über Punkt-zu-Punkt-Verbindungen mit dem Kommunikationsmaster 2. Durch ein entsprechendes Routen der Kommunikationtelegramme stellt der Kommunikationsmaster 2 dabei logische Verbindungen zwischen den Netzwerkteilnehmern 5, 12 - 18 her. In Fig. 1 sind einige der logischen Verbindungen 21 beispielhaft eingezeichnet. Der Kommunikationsmaster 2 dient mithin zur Steuerung des Datenflusses auf dem Kommunikationsnetzwerk 4.

Obwohl die Steuerungsvorrichtung 1 zur Steuerung sicherheitskritischer Prozesse, wie etwa einer Not-Aus-Funktion einer Maschine bei einer Auslösung einer Lichtschranke, verwendet wird, ist der Kommunikationsmaster 2 selbst nicht sicher ausgelegt.

Bei dem in Fig. 1 gezeigten Beispiel ist eine Teilmenge der Netzwerkteilnehmern 12, 13, 14, 15, 16, 17, 18, nämlich die Netzwerkteilnehmer 12, 13, 14 als sichere Netzwerkteilnehmer 12, 13, 14 ausgebildet. Das sichere Logikmodul 5 stellt ebenfalls einen sicheren Netzwerkteilnehmer dar. Im Betrieb kommuniziert das Logikmodul 5 über die Punkt-zu-Punkt-Verbindungen 20 und damit über die logischen Verbindungen 21 mit den sicheren Netzwerkteilnehmern 12, 13, 14, um einen sicherheitskritischen Prozess zu steuern. Die sicheren Netzwerkteilnehmer 12, 13, 14 können dabei insbesondere Ein- und/oder Ausgabemodule, wie Sensoren und Aktoren für den sicherheitskritischen Prozess sein.

Das SafetyBridge-System, welches dem in Fig. 1 gezeigten Ausführungsbeispiel vorzugsweise zugrunde liegt, beruht darauf, dass eine nicht sichere Steuerung, also der nicht sichere Kommunikationsmaster 2, mit Hilfe von Verbindungen über ein beliebiges Kommunikationsnetzwerk 4 und mit Kopierbefehlen den Austausch von sicheren Telegrammen mit sicheren E/A-Daten zwischen den Netzwerkteilnehmern mit sicheren Ein- und/oder Ausgängen und dem Logikmodul 5, welches die sicheren E/A-Daten verarbeitet und auch selber über sichere Ein- und/oder Ausgänge verfügen kann, ermöglicht. So entsteht zwischen dem Logikmodul 5 und jedem ihm zugeordneten sicheren Netzwerkteilnehmer eine sichere Punkt-zu Punkt-Verbindung in Gestalt der logischen Verbindung 21, auf der sichere Telegramme in beiden Richtungen übertragen werden.

Durch die logischen Verbindungen werden die Netzwerkteilnehmer 12, 13, 14 mit dem Logikmodul zu einer Gruppe von sicherheitsgerichteten Netzwerkteilnehmern zum Steuern einer sicherheitsrelevanten Applikation verknüpft.

Um nun das Logikmodul 5 und damit auch die sicherheitsrelevante Applikation zu parametrieren, sendet das Logikmodul 5 unter Ansprechen auf ein über das Kommunikationsnetzwerk 4 empfangenes Start-Kommando an den Kommunikationsmaster 2 eine Leseanforderung.

Dabei ist es von Vorteil, dass der Kommunikationsmaster 2 eingerichtet ist, über das Kommunikationsnetzwerk 4 an das Logikmodul 5 das Start-Kommando zu senden, um den Vorgang des Parametrierens zu starten. Damit kann der Vorgang des Parametrierens in einfacher Weise für ein oder mehrere solcher Logikmodule bei einem Power-Up des Systems gestartet werden.

Der Kommunikationsmaster 2 ist weiterhin eingerichtet, unter Ansprechen auf den Empfang der Leseanforderung Parametrierungsdaten an das Logikmodul 5 zu senden.

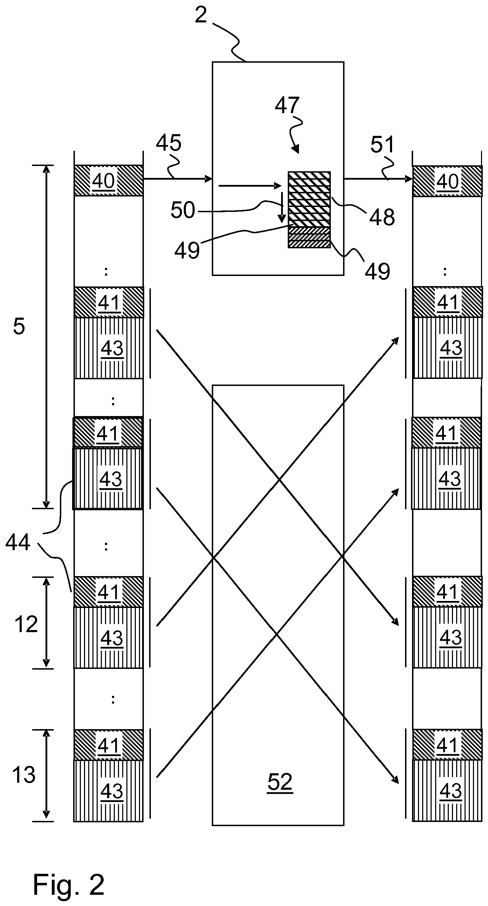

Zur Übertragung der Parameterdaten werden in Weiterbildung der Erfindung nun zusätzliche nicht sichere Ein- und Ausgangs-Bytes auf dem Logikmodul 5 implementiert, über die mit Hilfe eines einfachen Parametrier-Protokolls die Parametrierungsdaten von der nicht sicheren Steuerung, beziehungsweise dem Kommunikations-Master 2 an das Logikmodul 5 übertragen werden. Dazu kann der Kommunikationsmaster 4 insbesondere eingerichtet sein, die Parametrierungsdaten in einem dafür vorgesehenen logischen Kanal zu übertragen, welcher durch einen vorbestimmten Datenbereich der über das Kommunikationsnetzwerk 4 versendeten Telegramme repräsentiert wird. Bei dem in Fig. 2 gezeigten Beispiel ist als logischer Kanal ein Parameterkanal 40 vorgesehen.

Die Parametrierungsdaten können insbesondere die Typen der über die jeweiligen Punkt-zu-Punkt-Verbindungen 20, beziehungsweise entsprechend der logischen Verbindungen 21 mit dem Logikmodul 5 verbundenen Netzwerkteilnehmer 12, 13, 14, sowie die Verknüpfungen der Netzwerkteilnehmer 12, 13, 14 untereinander, damit also die Art und Weise, wie der sicherheitskritische Prozess gesteuert werden soll, enthalten.

Gemäß einer Weiterbildung der Erfindung werden die Parametrierungsdaten mit Hilfe einer sicheren Parametrier-/ Programmier-Software erzeugt, welche beispielsweise auf einem Rechner läuft. Vorzugsweise werden die Parameterdaten zumindest teilweise aus Gerätebeschreibungsdateien des Logikmoduls und der sicheren E/A-Netzwerkteilnehmer aufgebaut. Bei dem in Fig. 1 gezeigten Beispiel ist dazu ein Rechner 7, wie beispielsweise ein PC an das Kommunikationsnetzwerk 4 angeschlossen. Auf diesem Rechner 7 wird die sichere Parametrier- / Programmier-Software abgearbeitet und baut die Parameterdaten für die sicheren E/A-Netzwerkteilnehmer, in dem in Fig. 1 gezeigten Ausführungsbeispiel also für die Netzwerkteilnehmer 12, 13, 14 auf. Alternativ oder zusätzlich kann der Rechner 7, wie anhand der gestrichelten Verbindung in Fig. 1 symbolisiert, auch direkt an den Kommunikationsmaster 2 angeschlossen sein.

Die Parametrierungsdaten können gemäß einer vorteilhaften Ausführungsform der Erfindung in Segmente unterteilt sein und werden als Datenbaustein in der nicht sicheren Steuerung, beziehungsweise dem Kommunikationsmaster 2 hinterlegt. Der Kommunikationsmaster 2 teilt dem Logikmodul 5 mit, dass ein Datenbaustein mit Parametrierungsdaten vorhanden ist und dass das Logikmodul 5 mit diesen Daten gestartet werden soll. Erfindungsgemäß werden nun alle weiteren Aktivitäten für die Parametrierung vom Datenempfänger, also hier dem Logikmodul 5 gesteuert. Das Logikmodul 5 kennt den Aufbau der Parametrierungsdaten und überträgt
eine Datenanforderung in der Form ParameterReadRequest (Segment, Offset, Länge). Diese Anforderung wird so lange übertragen, bis die nicht sichere Steuerung mit den angeforderten Daten in der Form
ParameterReadResponse(Segment, Offset, Länge, Datum, Datum) antwortet. Allgemein, ohne Beschränkung auf die Ausführungsbeispiele ist gemäß dieser Weiterbildung der Erfindung das Logikmodul 5 also eingerichtet, zu erkennen, wie viele Parametrierungsdaten anzufordern sind und so lange Leseanforderungen an den Kommunikationsmaster 2 zu versenden, bis alle Parametrierungsdaten erhalten wurden. Weiterhin ist es dazu von Vorteil, wenn der Kommunikationsmaster 2 eingerichtet ist, die Parametrierungsdaten aufzuteilen und in mehreren Telegrammen nacheinander zu versenden. Damit entfallen Beschränkungen des Umfangs der Parametrierungsdaten. Der jeweilige Empfänger der Daten (sicheres Logikmodul oder auch sichere E/A-Netzwerkteilnehmer, wie weiter unten erläutert) senden einen Read-Request also immer so lange, bis die entsprechende Read-Response bei ihm eintrifft. Hierdurch ist die Übertragung über beliebige Netzwerke und Kombinationen von Netzwerken möglich.

Hat das Logikmodul 5 alle benötigten Parametrierungsdaten aus der nicht sicheren Steuerung ausgelesen, so startet es mit der Abarbeitung der parametrierten Verknüpfungen. Die Parametrierungsdaten, die das Logikmodul 5 aus der nicht sicheren Steuerung, beziehungsweise dem Kommunikationsmaster 2 ausgelesen hat, enthalten auch die Parameter für die zugeordneten sicheren E/A-Netzwerkteilnehmer, bei dem in Fig. 1 gezeigten Beispiel also der dem Logikmodul 5 zugeordneten sicheren Netzwerkteilnehmern 12, 13, 14.

Das Logikmodul teilt den zugeordneten sicheren E/A-Netzwerkteilnehmern 12, 13, 14 über Parameter-Kanäle seinen parametrierten Zustand mit. Darauf hin lesen die sicheren E/ANetzwerkteilnehmer, also die Netzwerkteilnehmenr 12, 13, 14 ihrerseits ihre Parameter mit Hilfe des Parametrier-Protokolls über die Parameter-Kanäle aus dem Logikmodul 5 aus.

Jedes sichere Logikmodul 5 und jeder sichere E/A-Netzwerkteilnehmer wechselt in den
parametrierten Zustand und startet die Verarbeitung nachdem er alle benötigten Parametrierungsdaten gelesen hat.

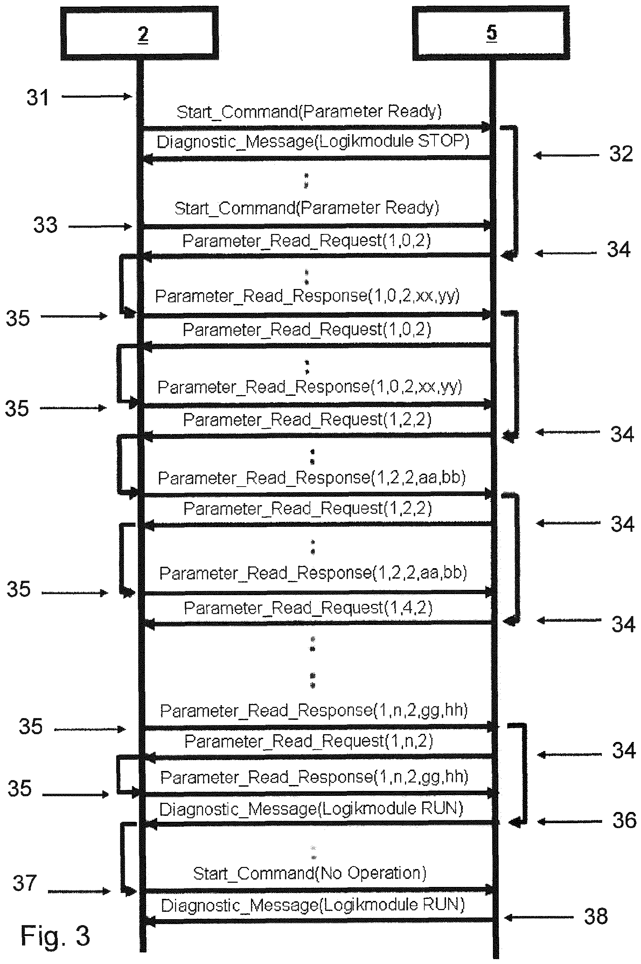

Um die Parameterdaten an die E/A-Module zu übertragen, werden die E/A-Bereiche für die sicheren Telegramme um einen Parameter-Kanal 41 erweitert, über den Geräte- und Kommunikationsparameter von den Logikmodulen zu den zugeordneten sicheren E/A-Netzwerkteilnehmern übertragen werden. Demnach enthält, wie in Fig. 2 dargestellt, ein sicheres Telegramm 44 einen Datenbereich 43 für sichere Nachrichten und einen Parameterkanal 41.
Im Folgenden wird anhand des in Fig. 3 gezeigten Ablaufdiagramms ein Ausführungsbeispiel für die Parametrierung eines Logikmoduls 5 beschrieben. Die Zeitachse dieses Ablaufdiagramms läuft von oben nach unten.

Der Parametrierungsvorgang beginnt mit dem Power-ON des Systems. Der Kommunikationsmaster 2 erkennt, dass eine Parametrierung für ein Logikmodul 5, beispielsweise in Form eines Daten-Bausteins zur Verfügung steht und sendet ein Start-Kommando ("Start_Command(Parameter Ready)") an das Logikmodul 5 (Schritt 31). Gemäß einer nicht auf das Ausführungsbeispiel beschränkten Weiterbildung ist das Logikmodul 5 weiterhin eingerichtet, ausgelöst durch ein Power-ON des Systems oder allgemeiner einem Initialisieren des Logikmoduls und/oder unter Ansprechen auf ein vom Kommunikationsmaster 2 empfangenes Start-Kommando zunächst ein Telegramm mit einem Zustand des Logikmoduls als Diagnose-Meldung an den Kommunikationsmaster 2 zu senden (Schritt 32, "Diagnostic Message (Logikmodule STOP)"). Das Initialisieren kann auch ein Anschalten des Logikmoduls 5 an das Kommunikationsnetzwerk 4 umfassen.

Bei dem in Fig. 3 gezeigten Beispiel wird nach dem Empfang der Diagnose-Meldung vom Kommunikationsmaster 2 ein Start-Kommando an das Logikmodul 5 gesendet (Schritt 33). Allgemein, ohne Beschränkung auf das spezielle dargestellte Ausführungsbeispiel kann der Kommunikationsmaster 2 dazu eingerichtet sein, so lange ein Start-Kommando an ein Logikmodul 5 zu versenden, bis der Kommunikationsmaster 2 eine Leseanforderung erhält.

Als Antwort auf "Parameter-Ready", beziehungsweise allgemein auf das Start-Kommando beginnt das Logikmodul 5 mit dem Auslesen der Parameter (Schritt 34), z. B. Segment: 1, Offset: 0, Länge: 2 (Kommando "Parameter Read Request (1. 0. 2)"). Unter Ansprechen darauf sendet der Kommunikationsmaster 2 die angeforderten Daten (Schritt 35). Diese Schritte 34, 35 werden wiederholt, bis die letzten Bytes der Parametrierungsdaten übertragen wurden.

Allgemein, ohne Beschränkung auf das spezielle in Fig. 3 dargestellte Ausführungsbeispiel ist in Weiterbildung der Erfindung also das Logikmodul 5 eingerichtet, mit der Leseanforderung eine Anforderung eines bestimmten Teils der Parametrierungsdaten zu versenden. Der Kommunikationsmaster 2 ist dann entsprechend dazu eingerichtet, auf diese Anforderung den angeforderten Teil der Parametrierungsdaten zu versenden. Die nicht sichere Steuerung, beziehungsweise der Kommunikationsmaster 2 muss zur Implementierung dieses erfindungsgemäßen Protokolls demgemäß nur über die Fähigkeit verfügen, die einzelnen Parameter-Bytes in der Form Parameter[Adresse (Segment + Offset), Länge] zu adressieren und in den Ausgabebereich zu kopieren. Dies ist meistens der Fall und somit ist die Integration in unterschiedlichste Steuerungen möglich. Auch kann die Breite des Parametrier-Protokolls an die Breite der Konsistenzbereiche der nicht sicheren Steuerung angepasst werden. Die Abarbeitung des Protokolls ist in Fig. 2 schematisch dargestellt. Im Kommunikationsmaster 2 ist der Parametersatz 47 in Segmente 48, 49 unterteilt abgespeichert. Die verschiedenen Segmente 48, 49 sind zur Verdeutlichung unterschiedlich schraffiert dargestellt. In Fig. 2 ist der Parametersatz 47 beispielhaft nur aus zwei Segmenten 48, 49 zusammengesetzt. Selbstverständlich können aber auch mehr Segmente vorhanden sein.

Die eingangsseitig vom Kommunikationsmaster 2 empfangenen Leseanforderungen 45 werden vom Kommunikationsmaster 2 dahingehend verarbeitet, dass aus einem bestimmten, in der Leseanforderung 45 angegebenen Segment 48 des im Kommunikationsmaster 2 gespeicherten Parametersatzes 47 eine bestimmte Anzahl von Bytes 49 ausgelesen wird, deren Position im Segment 48 durch einen ebenfalls in der Leseanforderung 45 angegebenen Offset 50 bestimmt ist. Die Bytes 50 werden dann ausgangsseitig in der oben bereits erwähnten Form einer ParameterReadResponse-Nachricht 51 über den Parameterkanal 40 an das Logikmodul 5 übertragen.

Sind alle Parametrierungsdaten übertragen, führt das Logikmodul 5 gemäß noch einer Weiterbildung der Erfindung eine Konsistenzprüfung der übertragenen Daten durch und sendet daraufhin eine Diagnose-Meldung an den Kommunikationsmaster (2), Schritt 36. Bei einer fehlerfreien Übertragung kann das Logikmodul 5 in Betrieb gehen und als Diagnose-Meldung eine entsprechende Nachricht (hier: "Diagnostic Message (Loqikmodule RUN)") an den Kommunikationsmaster 2 senden. Im Falle eines Fehlers kann als Diagnose-Meldung eine entsprechende Fehlernachricht als Diagnose-Meldung abgesendet werden. Ein möglicher Fehler ist etwa mangelnde Konsistenz der übertragenen Daten, die beispielsweise durch einen Übertragungsfehler hervorgerufen werden kann. Eine einfache Konsistenzprüfung ist eine CRC-Prüfung der empfangenen Parametrierungsdaten durch das sichere Logikmodul 5.

Auch im laufenden Betrieb der Steuerungsvorrichtung 1 können dann in den vorgesehenen Datenbereichen der versendeten Telegramme Start-Kommandos (Schritt 37) und Diagnose-Meldungen (Schritt 38) versendet werden, die signalisieren, dass derzeit keine neuen Parametrierungsdaten durch das Logikmodul 5 abzurufen sind und/oder dass das Logikmodul 5 in Betrieb ist.

Die Erfindung kann weiterhin auch dahingehend erweitert werden, dass differenzierte Startkommandos verwendet werden.

Das übliche Startkommando signalisiert dem Logikmodul 5, dass Parameter vorhanden sind und dementsprechend die oben erläuterte Verarbeitung zur Parametrierung des Logikmoduls 5 gestartet werden soll. Wie am Ausführungsbeispiel der Fig. 3 erläutert, wird daraufhin ein vom Logikmodul 5 gesteuertes Auslesen der Parameter des kompletten Projekts aus der nicht sicheren Steuerung, beziehungsweise dem Kommunikationsmaster 2 vorgenommen. Es schließt sich eine sichere Überprüfung auf Konsistenz (CRC, Plausibilität) an. Falls die Parametrierungsdaten fehlerfrei sind, erfolgt der Start der Verarbeitung. Anderenfalls wird vom Logikmodul 5 eine Fehlermeldung als Diagnose-Meldung generiert.

Eine weitere Möglichkeit besteht darin, dass der Kommunikationsmaster eingerichtet ist, ein Startkommando zu generieren, welches signalisiert, dass eine Parameterkennung vorhanden ist. In Weiterbildung der Erfindung kann hierbei das Logikmodul zum Auslesen der Parameterkennung (Header oder CRC) aus dem Kommunikationsmaster 2 und zum sicheren Vergleich der Parameterkennung mit remanent im Logikmodul gespeicherten Parametern eingerichtet sein. Bei positivem Vergleich der Parameterkennung mit den gespeicherten Daten startet das Logikmodul mit der Verarbeitung der Parametrierungsdaten, ansonsten wird wiederum vorzugsweise eine Fehlermeldung generiert und an den Kommunikationsmaster 2 gesendet.

Noch eine weitere Möglichkeit ist ein Startkommando, welches signalisiert, dass neue Parameter, insbesondere ein komplettes Projekt remanent im Logikmodul 5 gespeichert werden soll.

Als Bestätigung und zur Sicherheitsüberprüfung
kann die Parameterkennung des alten, zuvor remanent gespeicherten Parametersatzes auf der nicht sicheren Steuerung hinterlegt werden. Die alte Parameterkennung (Header oder CRC) wird dann vom Logikmodul 5 zunächst aus der nicht sicheren Steuerung ausgelesen, das Logikmodul nimmt einen sicheren Vergleich mit den remanent gespeicherten Parametern vor. Sind die Daten konsistent, löscht das Logikmodul 5 seinen remanenten Speicher, ansonsten sendet das Logikmodul 5 eine Fehlermeldung. Bei konsistenten Daten erfolgt ein Auslesen der neuen Parameter aus der nicht sicheren Steuerung mittels einer oder mehrerer Leseanforderungen des Logikmoduls. Die ausgelesenen neuen Parametrierungsdaten werden erneut auf Konsistenz überprüft, vorzugsweise mit CRC und einer Plausibilitätsprüfung. Falls die Parametrierungsdaten vom Logikmodul 5 als fehlerfrei erkannt werden, werden oder bleiben diese remanent gespeichert. Ansonsten wird wiederum eine Fehlermeldung gesendet.

Noch ein weiteres mögliches vom Kommunikationsmaster 2 ausgebbares Startkommando ist ein Stopp-Befehl für die Verarbeitung. Das Logikmodul kann hier eingerichtet sein, unter Ansprechen auf den Empfang dieses Startkommandos die Verarbeitung zu stoppen und entweder neu zu starten, oder es werden neue Parametrierungs-Daten angefordert.

Bei den bisher beschriebenen Ausführungsformen der Erfindung stellt der Kommunikationsmaster 2 die Datenquelle für die Parametrierungsdaten des Logikmoduls 5 dar. Es ist nun auch möglich, dass das Logikmodul 5 nach Empfang der Parametrierungsdaten seinerseits als Datenquelle fungiert. Dabei stellt das Logikmodul 5 den zugeordneten sicheren Netzwerkteilnehmern 12, 13, 14 die für diese bestimmten Parametrierungsdaten zur Verfügung.

Sobald das sichere Logikmodul alle Parameter aus dem nicht sicheren Kommunikationsmaster ausgelesen hat, meldet es über die Parameter-Kanäle an die zugeordneten sicheren Netzwerkteilnehmer 12, 13, 14 als Startkommando, dass Parameter für sie bereitstehen. Diese lesen daraufhin in der oben beschriebenen Weise ihre Parameter aus dem Logikmodul 5 aus. Demgemäß sind die dem Logikmodul 5 für die Steuerung einer sicherheitsgerichteten Applikation zugeordneten sicheren Netzwerkteilnehmer 12, 13, 14, oder zumindest einer dieser zugeordneten sicheren Netzwerkteilnehmer 12, 13, 14 dazu eingerichtet, unter Ansprechen auf den Empfang eines über das Kommunikationsnetzwerk 4 vom Logikmodul 5 gesendeten Start-Kommandos an das Logikmodul 5 eine Leseanforderung über das Kommunikationsnetzwerk 4 zu senden. Das Logikmodul 5 ist seinerseits eingerichtet, unter Ansprechen auf den Empfang der Leseanforderung Parametrierungsdaten an den jeweiligen sicheren Netzwerkteilnehmer 12, 13, 14 zu senden, von welchem die Leseanforderung empfangen wurde.

Das Start-Kommando des sicheren Logikmoduls 5 kann also beispielsweise die Nachricht an die Netzwerk-Teilnehmer enthalten, dass Parameter vorhanden sind und die Verarbeitung gestartet werden soll. Als dadurch ausgelöste Aktionen der zugeordneten sicheren E/A-Netzwerkteilnehmer 12, 13, 14 erfolgt gemäß einer Ausführungsform der Erfindung ein Auslesen der Parameter (Kommunikations- und Geräte-Parameter) aus dem sicheren Logikmodul 5 und eine sichere Überprüfung auf Konsistenz (CRC, Plausibilität). Falls die Überprüfung fehlerfrei ist, erfolgt ein Wechsel der in den parametrierten Zustand, Start der Verarbeitung mit Übertragung von sicheren E/A-Daten. Ansonsten erfolgt eine Fehlermeldung.

Außerdem kann ein Startkommando auch die Anweisung enthalten, dass die Verarbeitung gestoppt werden soll. In diesem Fall können die sicheren Netzwerkteilnehmer 12, 13, 14 eingerichtet sein, unter Ansprechen auf den Empfang eines solchen Startkommandos in den nicht parametrierten Zustand zu wechseln und eine Übertragung von sicheren Ersatzwerten mittels einer Leseanforderung beim Logikmodul 5 anfordern.

Die Erfindung bietet auch den Vorteil, dass sich das Verfahren zum Parametrieren hierarchisch erweitern lässt. Einem Logikmodul 5 können weitere Logikmodule als unterlagerte E/A-Teilnehmer zugeordnet sein. Die unterlagerten Logikmodule können ihre Parameter (einschließlich der Verknüpfungsanweisungen) dann aus dem überlagerten Logikmodul 5 auslesen. Für den Anwender stehen so mehr sichere E/A-Punkte und Verarbeitungskapazitäten zur Verfügung. Aus Anwendersicht gibt es nur ein System, das durch das überlagerte Logikmodul repräsentiert wird.

Das Auslesen aus dem überlagerten Logikmodul 5 kann insbesondere auf gleiche Weise geschehen, wie das oben beschriebene Auslesen der Parametrierungsdaten vom Logikmodul 5 aus dem Kommunikationsmaster 2.

Gemäß einer Weiterbildung der Erfindung sind also an das Kommunikationsnetzwerk 4 neben dem Logikmodul 5 zumindest ein weiteres Logikmodul angeschlossen, wobei das erste Logikmodul in erfindungsgemäßer Weise durch ein Startkommando des Kommunikationsmasters, zumindest einer Leseanforderung des Logikmoduls und einer Übertragung der Parametrierungsdaten vom Kommunikationsmaster 2 zum Logikmodul 5 parametriert wird, und wobei das weitere Logikmodul in entsprechender Weise parametriert wird, indem nach Erhalt der Parametrierungsdaten das Logikmodul ein Startkommando an das weitere Logikmodul sendet, das weitere Logikmodul unter Ansprechen auf den Erhalt des Startkommandos eine Leseanforderung an das erste Logikmodul absendet und das erste Logikmodul unter Ansprechen auf den Empfang der Leseanforderung die Parametrierungsdaten an das weitere Logikmodul überträgt. Um dieses hierarchische Verfahren durchzuführen, überträgt der Kommunikationsmaster 2 zusätzlich auch die Parametrierungsdaten für das weitere Logikmodul an das erste Logikmodul 5.

Ein Ausführungsbeispiel herzu zeigt das Verschaltungsschema der Fig. 4. Neben dem Logikmodul 5 ist ein weiteres Logikmodul 51 an das Kommunikationsnetzwerk 4 angeschlossen. Das weitere Logikmodul 51 soll mit den hier als sicher ausgebildeten Netzwerkteilnehmern 16, 17 eine weitere sicherheitsgerichtete Applikation steuern. Demgemäß bilden die E/A-Netzwerkteilnehmer 16, 17 zusammen mit dem weiteren Logikmodul 51 ebenso wie die E/A-Netzwerkteilnehmer 12, 13, 14 zusammen mit dem ersten Logikmodul 5 jeweils eine logische Gruppe von Modulen zur Ausführung einer sicherheitsgerichteten Funktion. Das weitere Logikmodul 51 kommuniziert mit dem ersten Logikmodul 5 über eine logische Verbindung 22. Über diese logische Verbindung erfolgt das Absenden des Startkommandos vom ersten Logikmodul 5, die eine oder mehreren Leseanforderungen durch das weitere Logikmodul 51, sowie die Übertragung der Parametrierungsdaten vom ersten Logikmodul 5 zum weiteren Logikmodul 51. Über die logischen Verbindungen 21, 23 können dann in einem weiteren Schritt, wie oben beschrieben, auch die jeweiligen zugeordnete E/A-Netzwerkteilnehmer 12, 13, 14, beziehungsweise 16, 17 in entsprechender Weise parametriert werden.

Generell bietet die Erfindung, wie sie oben beschrieben und in den Ansprüchen dargelegt ist, folgende Erweiterungsmöglichkeiten und Vorteile:
Die Abarbeitung des Protokolls muss nicht synchron zum Übertragungszyklus über das Netzwerk erfolgen. Konnte also das Protokoll nicht rechtzeitig zum nächsten Übertragungszyklus abgearbeitet werden, so können die alten Protokolldaten erneut gesendet werden.

Die Steuerung der Abfolge des Auslesens der Parameterdaten kann durch einen sicheren Teilnehmer so erfolgen, wie es nach den Maßgaben der Sicherheitstechnik notwendig ist.
Für die Übertragung der Parameterdaten von dem sicheren Logikmodul zu sicheren E/A Netzwerkteilnehmern, wie etwa den Netzwerkteilnehmern 12, 14, 14, 16, 17 gemäß Fig. 4 und unterlagerten Logikmodulen müssen die Kopier-Routinen, die bereits für die sicheren Nachrichten vorhanden sind, wenn überhaupt, dann nur geringfügig erweitert werden. Die Kopier-Routinen, mit denen vom Kommunikationsmaster 2 die von den und an die E/A-Netzwerkteilnehmern gesendeten Daten umkopiert werden, sind in Fig. 2 symbolisch dargestellt und mit dem Bezugszeichen 52 bezeichnet.

Der Empfänger der Parameter-Daten bestimmt den Zeitpunkt der Übertragung. Hierdurch sind z.B. keine zeitgesteuerten Anfragen des Senders notwendig, ob der Empfänger bereits hochgelaufen ist oder ob die Verbindung zwischen Sender und Empfänger schon besteht. Teilsysteme laufen mit den verfügbaren E/A-Teilnehmern automatisch hoch. Später angedockte E/A-Netzwerkteilnehmer können automatisch ins System aufgenommen werden.

Es ist dem Fachmann ersichtlich, dass die Erfindung nicht auf die anhand der Figuren dargestellten Ausführungsbeispiele beschränkt ist. Vielmehr kann die Erfindung in vielfältiger Weise im Rahmen des Gegenstandes der nachfolgenden Ansprüche variiert werden. So werden bei dem in Fig.3 gezeigten Beispiel jeweils zwei Bytes von Parametrierungsdaten angefordert. Diese Länge kann jedoch an die in einem Telegramm zur Verfügung stehende Datenbreite angepasst werden. Auch kann die Anzahl der Bytes, beispielsweise durch eine entsprechende Leseanforderung während der Übertragung eines Datenbausteins von Telegramm zu Telegramm variiert werden. So sieht das Ausführungsbeispiel der Fig. 3 auch bereits vor, dass die Leseanforderung die Anzahl der angeforderten Bytes enthält.

### Bezugszeichenliste:

- 1: Steuerungsvorrichtung
- 2: Kommunikationsmaster
- 4: Kommunikationsnetzwerk
- 5, 51: sicheres Logikmodul
- 7: Rechner
- 12 - 18: Netzwerkteilnehmer
- 20: Punkt-zu-Punkt-Verbindung
- 21, 22, 23: logische Verbindung
- 31 - 38: Verfahrensschritte zum Parametrieren des Logikmoduls 5
- 40, 41: Parameterkanal
- 43: Datenbereich für sichere Nachrichten44 sicheres Telegramm
- 45: Leseanforderung
- 47: Parametersatz
- 48: Segment
- 49: Anzahl von Bytes ausgelesen wird
- 50: Offset 50
- 51: ParameterReadResponse-Nachricht
- 52: Kopier-Routine

## Patentansprüche

1. Steuerungsvorrichtung (1) mit einem Kommunikationsnetzwerk (4) zum Steuern von sicherheitskritischen Prozessen in einer automatisierten Anlage, wobei die Steuerungsvorrichtung (1)
- einen nicht sicheren Kommunikationsmaster (2) zur Steuerung des Datenflusses auf dem Kommunikationsnetzwerk (4) und
- eine Mehrzahl von Netzwerkteilnehmern (12, 13, 14, 15, 16, 17, 18), wobei
- zumindest eine Teilmenge der Netzwerkteilnehmer (12, 13, 14, 15, 16, 17, 18) als sichere Netzwerkteilnehmer (12, 13, 14) ausgebildet sind, und
- zumindest ein sicheres Logikmodul (5) als weiteren Netzwerkteilnehmer zum Steuern einer sicherheitsrelevanten Applikation mittels einer Gruppe von sicherheitsgerichteten Netzwerkteilnehmern (12, 13, 14)
aufweist,
**dadurch gekennzeichnet, dass** das Logikmodul (5) und der Kommunikationsmaster (2) eingerichtet sind zur Durchführung folgender Schritte, um das Logikmodul (5) zu parametrieren:
- das Logikmodul (5) sendet unter Ansprechen auf den Empfang eines von dem Kommunikationsmaster (2) über das Kommunikationsnetzwerk (4) gesendeten Start-Kommandos über das Kommunikationsnetzwerk (4) eine Leseanforderung (45) an den Kommunikationsmaster (2),
- der Kommunikationsmaster (2) sendet unter Ansprechen auf den Empfang der Leseanforderung (45) Parametrierungsdaten an das Logikmodul (5),
- und dass zumindest einer der dem Logikmodul (5) für die Steuerung einer sicherheitsgerichteten Applikation zugeordneten sicheren Netzwerkteilnehmer (12, 13, 14) dazu eingerichtet ist, unter Ansprechen auf den Empfang eines vom Logikmodul (5) gesendeten Start-Kommandos eine Leseanforderung (45) über das Kommunikationsnetzwerk (4) an das Logikmodul (5) zu senden, und wobei das Logikmodul (5) dazu eingerichtet ist, unter Ansprechen auf den Empfang der Leseanforderung (45) Parametrierungsdaten an den jeweiligen sicheren Netzwerkteilnehmer (12, 13, 14) zu senden, von welchem die Leseanforderung (45) empfangen wurde.

2. Steuerungsvorrichtung (1) gemäß dem vorstehenden Anspruch, **dadurch gekennzeichnet, dass** das Logikmodul (5) eingerichtet ist, die Leseanforderung (45) nacheinander in Telegrammen (44) über das Kommunikationsnetzwerk (4) zumindest so lange zu verschicken, bis dieses vom Kommunikationsmaster (2) ein Telegramm (44) mit Parameterdaten erhält.

3. Steuerungsvorrichtung gemäß dem vorstehenden Anspruch, **dadurch gekennzeichnet, dass** das Logikmodul (5) eingerichtet ist, zu erkennen, wie viele Parametrierungsdaten anzufordern sind und so lange Leseanforderungen (45) an den Kommunikationsmaster (2) zu versenden, bis alle Parametrierungsdaten erhalten wurden.

4. Steuerungsvorrichtung (1) gemäß einem der vorstehenden Ansprüche, **dadurch gekennzeichnet, dass** der Kommunikationsmaster (2) eingerichtet ist, über das Kommunikationsnetzwerk (4) an das Logikmodul (5) das Start-Kommando zu senden, um den Vorgang des Parametrierens zu starten.

5. Steuerungsvorrichtung gemäß einem der vorstehenden Ansprüche, **dadurch gekennzeichnet, dass** der Kommunikationsmaster (2) eingerichtet ist, die Parametrierungsdaten in einem dafür vorgesehenen logischen Kanal (40) zu übertragen, welcher durch einen vorbestimmten Datenbereich der über das Kommunikationsnetzwerk (4) versendeten Telegramme (44) repräsentiert wird.

6. Steuerungsvorrichtung gemäß einem der vorstehenden Ansprüche, **dadurch gekennzeichnet, dass** der Kommunikationsmaster (2) eingerichtet ist, die Parametrierungsdaten aufzuteilen und in mehreren Telegrammen nacheinander zu versenden.

7. Steuerungsvorrichtung gemäß einem der vorstehenden Ansprüche, **dadurch gekennzeichnet, dass** das Logikmodul 5 eingerichtet ist, ausgelöst durch ein Power-ON des Systems oder ein Initialisieren des Logikmoduls (5) und/oder unter Ansprechen auf ein vom Kommunikationsmaster 2 empfangenes Start-Kommando ein Telegramm mit einem Zustand des Logikmoduls (5) als Diagnose-Meldung an den Kommunikationsmaster (2) zu senden.

8. Steuerungsvorrichtung gemäß einem der vorstehenden Ansprüche, **dadurch gekennzeichnet, dass** das Logikmodul (5) eingerichtet ist, mit der Leseanforderung (45) eine Anforderung eines bestimmten Teils der Parametrierungsdaten zu versenden und der Kommunikationsmaster (2) dazu eingerichtet ist, auf diese Anforderung den angeforderten Teil der Parametrierungsdaten zu versenden.

9. Steuerungsvorrichtung gemäß einem der vorstehenden Ansprüche, **dadurch gekennzeichnet, dass** der Kommunikationsmaster (2) eingerichtet ist, ein Startkommando zu generieren, welches signalisiert, dass eine Parameterkennung vorhanden ist, wobei das Logikmodul (5) zum Auslesen der Parameterkennung aus dem Kommunikationsmaster 2 und zum sicheren Vergleich der Parameterkennung mit remanent im Logikmodul gespeicherten Parametern eingerichtet ist.

10. Steuerungsvorrichtung gemäß einem der vorstehenden Ansprüche, **dadurch gekennzeichnet, dass**
- der Kommunikationsmaster (2) eingerichtet ist, ein Startkommando zu generieren, welches signalisiert, dass neue Parameter, insbesondere ein komplettes Projekt remanent im Logikmodul 5 gespeichert werden soll, wobei
- eine Parameterkennung des alten, zuvor remanent gespeicherten Parametersatzes im Kommunikationsmaster (2) hinterlegt ist,
wobei das Logikmodul (5) eingerichtet ist,
- diese Parameterkennung zunächst aus dem Kommunikationsmaster auszulesen und
- einen sicheren Vergleich mit den remanent gespeicherten Parametern vorzunehmen,
- bei Konsistenz der Daten das Logikmodul (5) seinen remanenten Speicher zu löschen und
- ansonsten eine Fehlermeldung zu senden,
- bei konsistenten Daten die neuen Parameter aus dem Kommunikationsmaster (2) mittels einer oder mehrerer Leseanforderungen (45) auszulesen,
- die ausgelesenen neuen Parametrierungsdaten erneut auf Konsistenz zu überprüfen und,
- falls die Parametrierungsdaten vom Logikmodul (5) als fehlerfrei erkannt werden, diese remanent zu speichern, und
- ansonsten eine Fehlermeldung zu senden.

11. Steuerungsvorrichtung gemäß einem der vorstehenden Ansprüche, **dadurch gekennzeichnet, dass**
- neben einem ersten Logikmodul (5)
- zumindest ein weiteres Logikmodul (51) an das Kommunikationsnetzwerk (4) angeschlossen ist, wobei
- das erste Logikmodul (5) durch ein Startkommando des Kommunikationsmasters (2), zumindest einer Leseanforderung (45) des ersten Logikmoduls (5) und einer Übertragung der Parametrierungsdaten vom Kommunikationsmaster (2) zum ersten Logikmodul (5) parametriert wird, und wobei
- der Kommunikationsmaster (2) zusätzlich auch die Parametrierungsdaten für das weitere Logikmodul (51) an das erste Logikmodul (5) überträgt, und wobei
- das weitere Logikmodul (51) parametriert wird, indem nach Erhalt der Parametrierungsdaten das Logikmodul (5) ein Startkommando an das weitere Logikmodul (51) sendet, das weitere Logikmodul (51) unter Ansprechen auf den Erhalt des Startkommandos eine Leseanforderung (45) an das erste Logikmodul (5) absendet und das erste Logikmodul (5) unter Ansprechen auf den Empfang der Leseanforderung (45) die Parametrierungsdaten an das weitere Logikmodul (51) überträgt.

12. Parametrierungsverfahren für eine Steuerungsvorrichtung (1) mit einem Kommunikationsnetzwerk (4) zum Steuern von sicherheitskritischen Prozessen in einer automatisierten Anlage, wobei die Steuerungsvorrichtung (1)
- einen nicht sicheren Kommunikationsmaster (2) zur Steuerung des Datenflusses auf dem Kommunikationsnetzwerk (4) und
- eine Mehrzahl von Netzwerkteilnehmern (12, 13, 14, 15, 16, 17, 18), wobei
- zumindest eine Teilmenge der Netzwerkteilnehmer (12, 13, 14, 15, 16, 17, 18) als sichere Netzwerkteilnehmer (12, 13, 14) ausgebildet sind, und
- zumindest ein sicheres Logikmodul (5) als weiteren Netzwerkteilnehmer zum Steuern einer sicherheitsrelevanten Applikation mittels einer Gruppe von sicherheitsgerichteten Netzwerkteilnehmern (12, 13, 14) aufweist,
**dadurch gekennzeichnet, dass** das Logikmodul (5) und der Kommunikationsmaster (2) folgende Schritte durchführen, um das Logikmodul (5) zu parametrieren:
- das Logikmodul (5) sendet unter Ansprechen auf den Empfang eines über das Kommunikationsnetzwerk (4) von dem Kommunikationsmaster (2) gesendeten Start-Kommandos über das Kommunikationsnetzwerk (4) eine Leseanforderung (45) an den Kommunikationsmaster (2,
- der Kommunikationsmaster (2) sendet unter Ansprechen auf den Empfang der Leseanforderung Parametrierungsdaten an das Logikmodul (5),
- und dass zumindest eine der dem Logikmodul (5) für die Steuerung einer sicherheitsgerichteten Applikation zugeordneten sicheren Netzwerkteilnehmer (12, 13, 14) dazu eingerichtet ist, unter Ansprechen auf den Empfang eines vom Logikmodul (5) gesendeten Start-Kommandos eine Leseanforderung (45) über das Kommunikationsnetzwerk (4) an das Logikmodul (5) zu senden, und wobei das Logikmodul (5) dazu eingerichtet ist, unter Ansprechen auf den Empfang der Leseanforderung (45) Parametrierungsdaten an den jeweiligen sicheren Netzwerkteilnehmer (12, 13, 14) zu senden, von welchem die Leseanforderung (45) empfangen wurde.

## Claims

1. A control device (1) with a communications network (4) for controlling safety-critical processes in an automated plant, wherein the control device (1)
- has an non-safe communication master (2) for controlling the data flow on the communications network (4) and
- a plurality of network subscribers (12, 13, 14, 15, 16, 17, 18), wherein
- at least one subset of the network subscribers (12, 13, 14, 15, 16, 17, 18) are designed as safe network subscribers (12, 13, 14), and
- at least one safe logic module (5) as further network subscriber for controlling a safety-relevant application by means of a group of safety-related network subscribers (12, 13, 14),
**characterized in that** the logic module (5) and the communication master (2) are set up for carrying out the following steps in order to parameterize the logic module (5):
- in response to the receipt of a start command transmitted via the communications network (4), the logic module (5) transmits a read request (45) to the communication master (2) via the communications network (4),
- in response to the receipt of the read request (45), the communication master (2) transmits parameterization data to the logic module (5),
- and that at least one of the safe network subscribers (12, 13, 14) which are associated with the logic module (5) for the control of a safety-related application is set up to transmit, in response to the receipt of a start command transmitted by the logic module (5) via the communications network (4), a read request (45) to the logic module (5) via the communications network (4), and wherein the logic module (5) is set up to transmit, in response to the receipt of the read request (45), parameterization data to the particular safe network subscriber (12, 13, 14) from which the read request (45) was received.

2. The control device (1) as claimed in the preceding claim, **characterized in that** the logic module (5) is set up to send the read request (45) successively in telegrams (44) via the communications network (4) at least until it receives a telegram (44) with parameter data from the communication master (2).

3. The control device as claimed in the preceding claim, **characterized in that** the logic module (5) is set up to detect how much parameterization data are to be requested and to transmit read requests (45) to the communication master (2) until all parameterization data have been received.

4. The control device (1) as claimed in one of the preceding claims, **characterized in that** the communication master (2) is set up to transmit the start command to the logic module (5) via the communications network (4) to start the parameterization process.

5. The control device as claimed in one of the preceding claims, **characterized in that** the communication master (2) is set up to transmit the parameterization data in a logical channel (40) provided for therefor, that is represented by a predetermined data range of the telegrams (44) transmitted via the communications network (4).

6. The control device as claimed in one of the preceding claims, **characterized in that** the communication master (2) is set up to divide up the parameterization data and to transmit them successively in a plurality of telegrams.

7. The control device as claimed in one of the preceding claims, **characterized in that** the logic module (5) is set up to transmit, triggered by a system power-on or an initialization of the logic module (5) and/or in response to a start command received from the communication master (2), a telegram to the communication master (2) with a state of the logic module (5) as a diagnostic message.

8. The control device as claimed in one of the preceding claims, **characterized in that** the logic module (5) is set up to transmit with the read request (45) a request of a particular part of the parameterization data, and the communication master (2) is set up to transmit the requested part of the parameterization data on this request.

9. The control device as claimed in one of the preceding claims, **characterized in that** the communication master (2) is set up to generate a start command which signals that a parameter identifier is present, wherein the logic module (5) is set up to read out the parameter identifier from the communication master (2) and to safely compare the parameter identifier with parameters retentively stored in the logic module.

10. The control device as claimed in one of the preceding claims, **characterized in that**
- the communication master (2) is set up to generate a start command which signals that new parameters, in particular a complete project, are to be retentively stored in the logic module (5), wherein
- a parameter identifier of the old previously retentively stored parameter set is stored in the communication master (2),
wherein the logic module (5) is set up
- to first read out this parameter identifier from the communication master and
- to undertake a safe comparison with the retentively stored parameters,
- in the event that the data are consistent, to erase the retentively memory of the logic module (5) and
- otherwise to transmit an error message,
- in the event of consistent data, to read out the new parameters from the communication master (2) by means of one or more read requests (45),
- to recheck the new parameterization data read out for consistency and
- if the parameterization data are detected by the logic module (5) to be free from errors, to retentively store them, and
- otherwise to transmit an error message.

11. The control device as claimed in one of the preceding claims, **characterized in that**
- as well as a first logic module (5),
- at least one further logic module (51) is connected to the communications network (4), wherein
- the first logic module (5) is parameterized by a start command of the communication master (2), at least one read request (45) of the first logic module (5), and a transmission of the parameterization data from the communication master (2) to the first logic module (5), and wherein
- in addition, the communication master (2) also transmits the parameterization data for the further logic module (51) to the first logic module (5), and wherein
- the further logic module (51) is parameterized **in that** the logic module (5) transmits after receipt of the parameterization data a start command to the further logic module (51), the further logic module (51) transmits in response to the receipt of the start command a read request (45) to the first logic module (5) and the first logic module (5) transmits in response to the receipt of the read request (45) the parameterization data to the further logic module (51).

12. Parameterization method for a control device (1) with a communications network (4) for controlling safety-critical processes in an automated plant, wherein the control device (1)
- has an non-safe communication master (2) for controlling the data flow on the communications network (4) and
- a plurality of network subscribers (12, 13, 14, 15, 16, 17, 18), wherein
- at least one subset of the network subscribers (12, 13, 14, 15, 16, 17, 18) are designed as safe network subscribers (12, 13, 14), and
- at least one safe logic module (5) as further network subscriber for controlling a safety-relevant application by means of a group of safety-related network subscribers (12, 13, 14),
**characterized in that** the logic module (5) and the communication master (2) carry out the following steps in order to parameterize the logic module (5):
- in response to the receipt of a start command transmitted via the communications network (4), the logic module (5) transmits a read request (45) to the communication master (2) via the communications network (4),
- in response to the receipt of the read request, the communication master (2) transmits parameterization data to the logic module (5),
- and that at least one of the safe network subscribers (12, 13, 14) which are associated with the logic module (5) for the control of a safety-related application is set up to transmit, in response to the receipt of a start command transmitted by the logic module (5) via the communications network (4), a read request (45) to the logic module (5) via the communications network (4), and wherein the logic module (5) is set up to transmit, in response to the receipt of the read request (45), parameterization data to the particular safe network subscriber (12, 13, 14) from which the read request (45) was received.

## Revendications

1. Dispositif de commande (1) avec un réseau de communication (4) destiné à commander des processus critiques pour la sécurité dans une installation automatisée, où le dispositif de commande (1) présente
- un maître de communication (2) non sécurisé afin de commander le flux de données sur le réseau de communication (4) et
- une pluralité de participants au réseau (12, 13, 14, 15, 16, 17, 18), où
- au moins un sous-ensemble des participants au réseau (12, 13, 14, 15, 16, 17, 18) sont conçus en tant que participants au réseau (12, 13, 14) sécurisés, et
- au moins un module logique (5) sécurisé en tant qu'autre participant au réseau afin de commander une application liée à la sécurité au moyen d'un groupe de participants au réseau (12, 13, 14) orientés vers la sécurité,
**caractérisé en ce que** le module logique (5) et le maître de communication (2) sont configurés pour exécuter les étapes suivantes afin de paramétrer le module logique (5) :
- en réponse à la réception d'un ordre de démarrage émis par le maître de communication (2) via le réseau de communication (4), le module logique (5) émet une requête de lecture (45) via le réseau de communication (4) vers le maître de communication (2),
- en réponse à la réception de la requête de lecture (45), le maître de communication (2) émet des données de paramétrage vers le module logique (5),
- et **en ce qu'**au moins l'un des participants au réseau (12, 13, 14) sécurisés attribués au module logique (5) pour la commande d'une application orientée vers la sécurité est configuré pour, en réponse à la réception d'un ordre de démarrage émis par le module logique (5), émettre une requête de lecture (45) via le réseau de communication (4) vers le module logique (5), et où le module logique (5) est configuré pour, en réponse à la réception de la requête de lecture (45), émettre des données de paramétrage vers le participant au réseau (12, 13, 14) sécurisé respectif duquel la requête de lecture (45) avait été réceptionnée.

2. Dispositif de commande (1) selon la revendication précédente, **caractérisé en ce que** le module logique (5) est configuré pour expédier la requête de lecture (45) tour à tour en télégrammes (44) via le réseau de communication (4) au moins jusqu'à ce que celui-ci obtienne du maître de communication (2) un télégramme (44) avec des données de paramétrage.

3. Dispositif de commande selon la revendication précédente, **caractérisé en ce que** le module logique (5) est configuré pour reconnaître combien de données de paramétrage sont à requérir et d'envoyer des requêtes de lecture (45) au maître de communication (2) jusqu'à ce que toutes les données de paramétrage aient été obtenues.

4. Dispositif de commande (1) selon l'une des revendications précédentes, **caractérisé en ce que** le maître de communication (2) est configuré pour émettre l'ordre de démarrage via le réseau de communication (4) vers le module logique (5) afin de démarrer la procédure de paramétrage.

5. Dispositif de commande selon l'une des revendications précédentes, **caractérisé en ce que** le maître de communication (2) est configuré pour transmettre les données de paramétrage dans un canal logique (40) prévu à cet effet, lequel est représenté par une plage de données prédéterminée des télégrammes (44) envoyés via le réseau de communication (4).

6. Dispositif de commande selon l'une des revendications précédentes, **caractérisé en ce que** le maître de communication (2) est configuré pour répartir les données de paramétrage et les envoyer tour à tour dans plusieurs télégrammes.

7. Dispositif de commande selon l'une des revendications précédentes, **caractérisé en ce que** le module logique 5 est configuré pour, déclenché par une mise sous tension du système ou une initialisation du module logique (5) et/ou en réponse à un ordre de démarrage réceptionné par le maître de communication 2, envoyer un télégramme avec un état du module logique (5) en tant que notification de diagnostic vers le maître de communication (2).

8. Dispositif de commande selon l'une des revendications précédentes, **caractérisé en ce que** le module logique (5) est configuré pour envoyer avec la requête de lecture (45) une requête pour une partie déterminée des données de paramétrage, et le maître de communication (2) est configuré pour envoyer la partie requise des données de paramétrage suite à cette requête.

9. Dispositif de commande selon l'une des revendications précédentes, **caractérisé en ce que** le maître de communication (2) est configuré pour générer un ordre de démarrage, lequel signale qu'une reconnaissance de paramètre est présente, dans lequel le module logique (5) est configuré pour lire la reconnaissance de paramètre depuis le maître de communication (2) et pour comparer de façon sécurisée la reconnaissance de paramètre avec des paramètres mémorisés dans le module logique de façon rémanente.

10. Dispositif de commande selon l'une des revendications précédentes, **caractérisé en ce que**
- le maître de communication (2) est configuré pour générer un ordre de démarrage, lequel signale que de nouveaux paramètres, en particulier un projet complet doit être mémorisé de façon rémanente dans le module logique 5, où
- une reconnaissance de paramètre de l'ancien jeu de paramètres, auparavant mémorisé de façon rémanente, est déposée dans le maître de communication (2),
dans lequel le module logique (5) est configuré pour
- lire d'abord cette reconnaissance de paramètre depuis le maître de communication et
- entreprendre une comparaison sécurisée avec les paramètres mémorisés de façon rémanente,
- en cas de cohérence des données, le module logique (5), effacer sa mémoire rémanente et
- sinon émettre une notification d'erreur,
- en cas de données cohérentes, lire les nouveaux paramètres depuis le maître de communication (2) au moyen d'une ou plusieurs requêtes de lecture (45),
- vérifier encore une fois quant à leur cohérence les nouvelles données de paramétrage lues et,
- si les données de paramétrage sont reconnues par le module logique (5) comme étant libres de toute erreur, mémoriser celles-ci de façon rémanente, et
- sinon émettre une notification d'erreur.

11. Dispositif de commande selon l'une des revendications précédentes, **caractérisé en ce que**
- à côté d'un premier module logique (5)
- au moins un autre module logique (51) est raccordé au réseau de communication (4), où
- le premier module logique (5) est paramétré, par un ordre de démarrage du maître de communication (2), d'au moins une requête de lecture (45) du premier module logique (5) et une transmission des données de paramétrage du maître de communication (2) vers le premier module logique (5), et où
- le maître de communication (2) transmet de plus aussi les données de paramétrage pour l'autre module logique (51) vers le premier module logique (5), et où
- l'autre module logique (51) est paramétré **en ce qu'**après obtention des données de paramétrage, le module logique (5) émet un ordre de démarrage vers l'autre module logique (51), l'autre module logique (51), en réponse à l'obtention de l'ordre de démarrage, envoie une requête de lecture (45) au premier module logique (5) et le premier module logique (5), en réponse à la réception de la requête de lecture (45), transmet les données de paramétrage à l'autre module logique (51).

12. Procédé de paramétrage pour un dispositif de commande (1) avec un réseau de communication (4) destiné à commander des processus critiques pour la sécurité dans une installation automatisée, dans lequel le dispositif de commande (1) présente
- un maître de communication (2) non sécurisé afin de commander le flux de données sur le réseau de communication (4) et
- une pluralité de participants au réseau (12, 13, 14, 15, 16, 17, 18), où
- au moins un sous-ensemble des participants au réseau (12, 13, 14, 15, 16, 17, 18) sont conçus en tant que participants au réseau (12, 13, 14) sécurisés, et
- au moins un module logique (5) sécurisé en tant qu'autre participant au réseau afin de commander une application liée à la sécurité au moyen d'un groupe de participants au réseau (12, 13, 14) orientés vers la sécurité,
**caractérisé en ce que** le module logique (5) et le maître de communication (2) sont configurés pour exécuter les étapes suivantes afin de paramétrer le module logique (5) :
- en réponse à la réception d'un ordre de démarrage émis par le maître de communication (2) via le réseau de communication (4), le module logique (5) émet une requête de lecture (45) via le réseau de communication (4) vers le maître de communication (2),
- en réponse à la réception de la requête de lecture, le maître de communication (2) émet des données de paramétrage vers le module logique (5),
- et **en ce qu'**au moins l'un des participants au réseau (12, 13, 14) sécurisés attribués au module logique (5) pour la commande d'une application orientée vers la sécurité est configuré pour, en réponse à la réception d'un ordre de démarrage émis par le module logique (5), émettre une requête de lecture (45) via le réseau de communication (4) vers le module logique (5), et où le module logique (5) est configuré pour, en réponse à la réception de la requête de lecture (45), émettre des données de paramétrage vers le participant au réseau (12, 13, 14) sécurisé respectif duquel la requête de lecture (45) avait été réceptionnée.
